# EUROPEAN PATENT SPECIFICATION

(11) **EP 2 081 823 B1**
(45) Date of publication and mention of the grant of the patent: **13.10.2010**
(21) Application number: 07825685.6
(22) Date of filing: 12.11.2007
(51) Int. Cl.: B64C 27/10, B64C 27/20, B64C 29/00, B64C 39/02

(54) **COMPACT ULTRALIGHT AIRCRAFT OF REDUCED DIMENSIONS, WITH VERTICAL TAKE-OFF AND LANDING**
KOMPAKTES ULTRALEICHTES FLUGZEUG MIT REDUZIERTEN ABMESSUNGEN FÜR SENKRECHTES STARTEN UND LANDEN
AVION COMPACT ULTRALÉGER DE DIMENSIONS RÉDUITES, AVEC DÉCOLLAGE ET ATTERRISSAGE VERTICAUX

(30) Priority: 13.11.2006 IT MI20062174
(43) Date of publication of application: 29.07.2009
(73) Proprietor: Castoldi, Fabrizio, 20145 Milan (IT)
(72) Inventor: CASTOLDI, Fabrizio, 20145 Milan (IT); BOTTASSO, Carlo Luigi, 20052 Monza (IT)
(74) Representative: De Gregori, Antonella
(86) International application number: PCT/IB2007/003522
(87) International publication number: WO 2008/059363

(56) References cited:
- FR-A- 1 328 818
- US-A- 2 988 301
- US-A- 3 584 810
- US-A- 3 640 485
- US-A- 4 196 877
- US-B1- 6 464 166

## Description

The present invention refers to a compact single or double seat aircraft, remote controlled without people on board, with a rotating wing.

Currently there are numerous, and very different, models of single or double seat aircrafts, remote controlled without people on board, with rotating wings. However, in general, in all existing models of helicopters the control of the direction is ensured by the control of the angle of attack of the rotating blades with the rotors provided in the upper portions of the helicopters.

As a matter of fact, by operating on the pitch of the rotating blades, through cyclical and/or collective variations, it is possible to generate forces and resulting torques such to allow the equilibrium of the aircraft in flight, and its relative control, with respect to the three roll axis, longitudinal to the forward motion, pitching axis, transverse to forward motion and yaw axis, usually even by means of a tail rotor.

However, though commonly applied and functional, such solution is not very suitable to reduce the dimensions and overall weights of the aircraft.

As a matter of fact, by reducing the weights below a limit value it is possible to fall in the range of aircrafts, so called ultralight, regulated by some advantageous measures such as for example the exemption from the obligation to submit flight plans before taking off.

In addition, current aircrafts have a seriuos problem regarding risks involved in using a tail rotor and the presence of one or more main rotors, particularly for small aircrafts where the height of the rotors, when the aircraft is on the ground, is equivalent to the one of an adult human.

FR 1 328 818 discloses an aircraft according to the preamble of claim 1.

US 6 464 166 discloses an aircraft wherein the steering is performed by vanes associated with a rotor.

An objective of the present invention is to manufacture a device capable of overcoming the abovementioned drawbacks of the known art in an extremely simple, economical and particularly functional manner.

Another objective is to manufacture a compact single or double seat aircraft, remote controlled without people on board, whose controllability is ensured by two series of rows of flaps arranged orthogonal to each other.

Further objective is to provide a compact single or double seat aircraft, remote controlled without people on board, capable of reducing problems regarding risks involved in using a tail rotor and the presence of unshielded rotors.

These objectives according the present invention are attained by manufacturing a compact single or double seat aircraft, remote controlled without people on board, with a rotating wing as described in claim 1. Further characteristics of the invention are described by the subsequent claims.

Characteristics and advantages of a compact single or double seat aircraft, remote controlled without people on board, with a rotating wing according to the present invention shall be more evident from the following exemplifying and non-limiting description with reference to the schematic drawings attached wherein:
Figure 1 is a schematic perspective top view of an embodiment of a compact single or double seat aircraft, remote controlled without people on board, with a rotating wing according to the invention;
Figure 2 is a side view of the single or double seat aircraft, remote controlled without people on board, of figure 1;

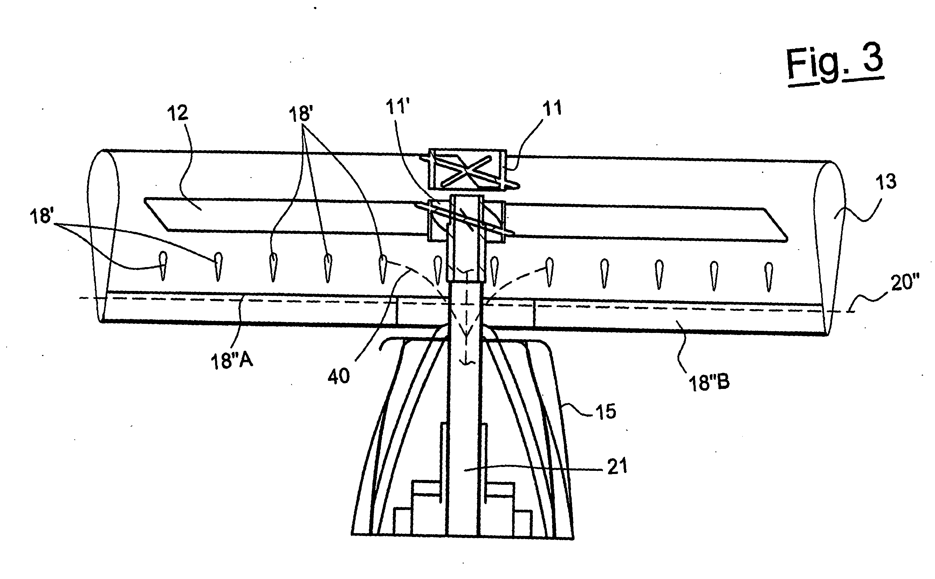

Figure 3 is a view in partial section of the single or double seat aircraft, remote controlled without people on board, of figure 1 along the line B-B shown in figure 2;

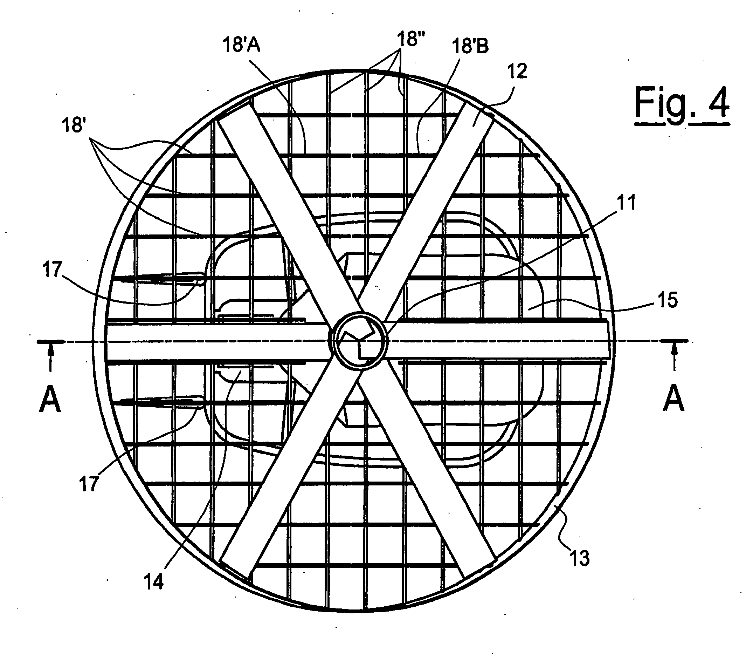

Figure 4 is a top view of the single or double seat aircraft, remote controlled without people on board, of figure 1; and
Figure 5 is a section view of the single or double seat aircraft, remote controlled without people on board, of figure 1 along the line A-A shown in figure 4.

With reference to the figures, a compact single or double seat aircraft, remote controlled without people on board, is indicated by 10.

The aircraft 10 according to the present invention is an extremely light aircraft, which can be classified within the ultralight category with a maximum weight of approximately 300-350 kg, and very small in terms of dimensions.

Such aircraft is not provided with the tail rotor due to the abovementioned dimension, weight and safety reasons and in order to guarantee equilibrium and the thrust required to keep the aircraft in flight, is provided with two coaxial counter-rotating rotors 11, 11'. At least two rigid blades 12 are connected to each of the abovementioned two counter-rotating rotors 11, 11', thus substantially defining the overall dimensions of the aircraft 10.

As a matter of fact, the overall dimensions of the aircraft described herein can be entirely contained in a cylinder with a maximum base diameter of 4.5 metres, and with height of approximately 2 metres.

Advantageously the aircraft 10 can also be of the type controlled remotely without people on board and in such case the abovementioned dimensions can be of very small size similar to the ones commonly known for aircraft modelling.

According to the embodiment described above, the aircraft 10 controlled remotely without people on board is particularly suitable for video surveillance operations in areas inaccessible for aircrafts of bigger dimensions or for controlling areas highly risky for the possible pilot of the aircraft himself.

The two abovementioned rotors 11, 11' can have a variable or constant plane of rotation, just like the rigid blades 12 themselves can have a variable or fixed blade angle.

Both the coaxial counter-rotating rotors 11, 11' and the rigid blades 12 connected to them are ducted in a cylindrical structure 13 of a radius slightly greater with respect to the size of said rigid blades 12 thus shielding them towards the exterior, enhancing safety when the aircraft is on the ground. In addition, such cylindrical structure 13 also improves the aerodynamic performance.

The two coaxial counter-rotating rotors 11, 11' are rotated by an engine 14 to which they are connected through driving means 21, such as a rotating shaft.

The traction generated by the two counter-rotating rotors 11, 11' can vary in various ways. For example, it is possible to provide a collective variation of the pitch of the blades or the variation of the number of revolutions of the engine 14.

In case the aircraft 10 is intended for transporting at least one person, the aircraft 10 comprises a compartment 15 which is rigidly connected to the cylindrical structure 13 and contains at least one seat 16 which represents the pilot's cockpit 19; alternatively there can also be another seat 16 for a second passenger.

Otherwise, in case the aircraft 10 is of the type controlled remotely without people on board, an embodiment particularly suitable to perform video surveillance operations in areas inaccessible for aircrafts of bigger dimensions or for controlling areas highly risky for the possible pilot of the aircraft himself, the abovementioned compartment 15 rigidly connected to the cylindrical structure 13 can be provided with facilities such as video cameras or sensors, adapted to perform the abovementioned surveillance and control operations.

Advantageously, the compartment 15 is positioned below the said two coaxial counter-rotating rotors 11, 11' in such a manner to create a stable relative alignment between the centre of thrust (approximately at the level of the rotors) and the centre of gravity of the aircraft 10 (approximately at the level of the pilot). As a matter of fact, according to the present invention as described above, intended for transporting at least one person, but also in the version controlled remotely without people on board, the centre of thrust is always located at a much higher position with respect to the centre of gravity thus enhancing the performance of the aircraft 10 in terms of stability.

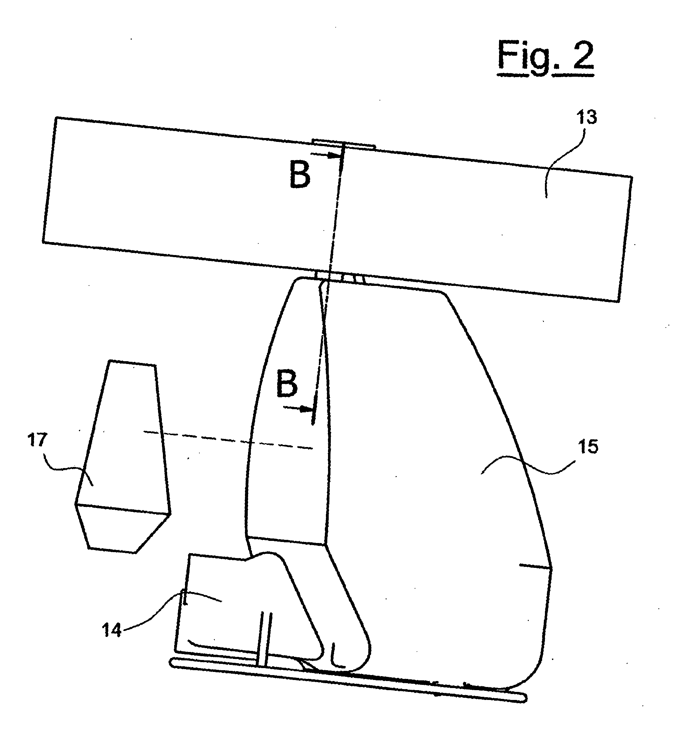

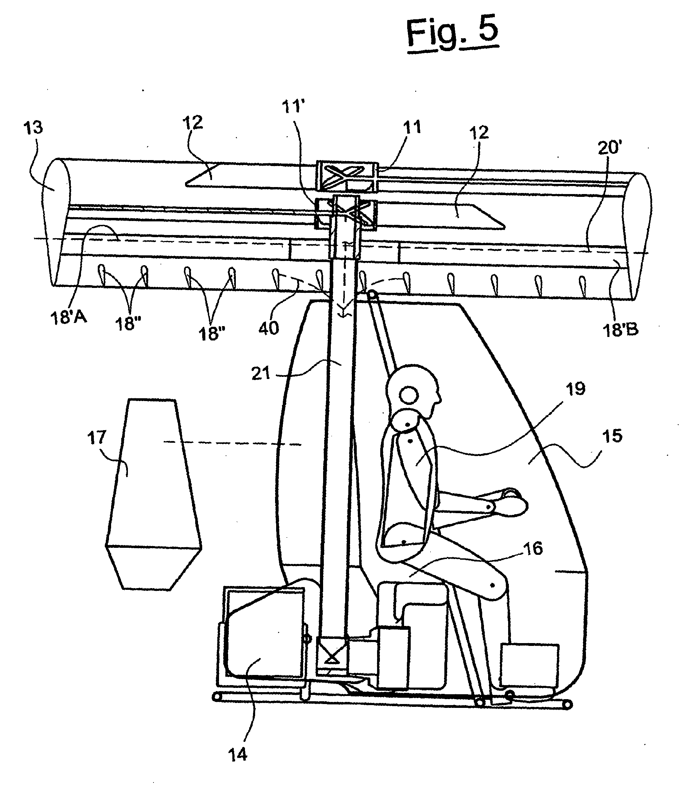

There can be provided at least one fin 17 with the function of lateral/directional stabilisation of the aircraft, which in the embodiment shown mainly extends vertically and it is connected to the compartment 15 at a rear position, as indicated by dashes and dots in figures 2 and 5.

In addition, the aircraft 10 comprises two series of parallel rows of flaps 18', 18" arranged orthogonal to each other to form a grid.

The rows of flaps 18', 18" which compose the two rows, are all parallel to each other, joined and contained in the cylindrical structure 13 in various cylindrical sections arranged one over the other.

Each of these parallel rows according to the invention is composed by at least two flaps 18'A 18'B; 18"A 18" B arranged in series to each other.

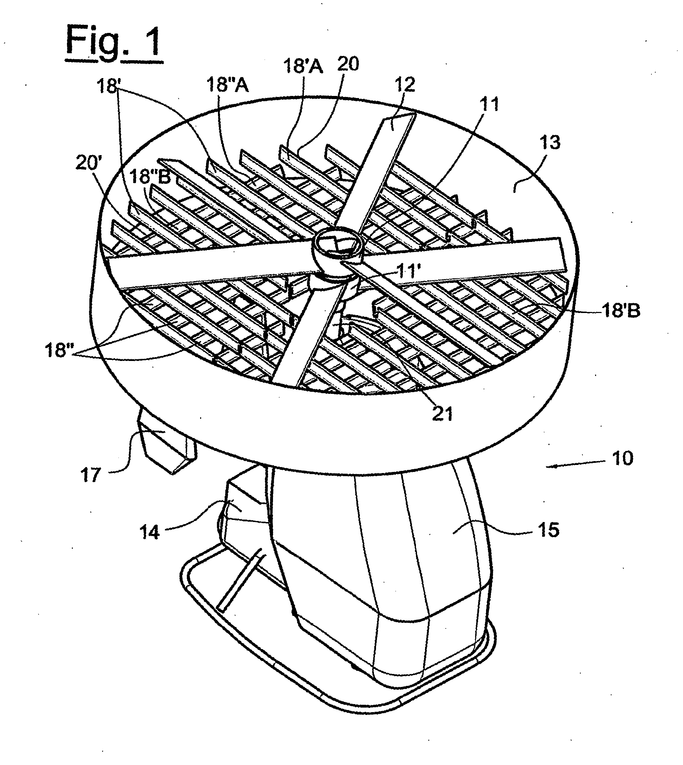

Of these two series of parallel rows of flaps 18', 18" at least one, in figure 1 series 18', is arranged longitudinally with respect to the direction of motion of the aircraft 10 on which it is mounted.

On all the flaps 18'A 18'B; 18"A 18"B, which compose the two series 18', 18", some special rotations commanded by the pilot through the connection elements 40 are allowed.

The first type of rotation allowed is the one which, for example, leads the flaps 18'A, 18'B of a row of flaps of series 18' to perform in a joint manner an angular motion with respect to the said cylindrical structure 13 as if each row formed a single rigid rotating body. Such rotation occurs around an axis, indicated by dashed lines by 20' for series 18' and 20" for series 18", which generally crosses longitudinally each row forming the two series of flaps 18' and 18" in a position close to their upper ends.

In addition, another rotation is allowed, that is there can be a relative angular motion between the flaps, for example 18'A and 18'B which compose the same row of series 18'.

As mentioned above the two series of parallel rows of flaps 18' 18" are contained in cylindrical structure 13 in various cylindrical sections arranged one over the other below the two coaxial counter-rotating rotors (11, 11').

In case the two series of parallel rows of flaps 18' 18" are arranged below the two coaxial counter-rotating rotors (11, 11'), example shown in the figures, the grid is provided with a central portion adapted to allow the passage of the driving means 21 of the rotational motion from the engine 14 to the two coaxial counter-rotating rotors (11, 11').

It is extremely easy to understand the operation of the device subject of the invention.

The controllability of the aircraft 10 in flight, that is the control of the motion of the same around a longitudinal axis of motion, rotation of roll, the movement around the transverse axis on motion, pitch rotation, and the control of the movement around the axis orthogonal to the plane on which the aircraft moves, yaw axis, and the generation of forces in the side and longitudinal planes of the aircraft depends on the arrangement and the rotations of the rows of flaps which form the series 18' 18" and the relative rotations between the flaps, for example, 18'A and 18'B which form a row of series 18'.

Control on the roll axis and generation of side forces depends on the rotation of the rows of flaps 18', intended as rigid bodies that is hindering the relative rotations between the flaps which compose the same row, arranged along the direction of motion of the aircraft. As a matter of fact, due to this particular rotation particular side forces and resulting torques are generated around the roll axis.

Control on the pitch and longitudinal axis depends on the rotation of the rows of flaps 18", intended as rigid bodies, that is hindering the relative rotations between the flaps which compose the same row, arranged along the direction transverse to the motion of the aircraft. As a matter if fact, due to this particular rotation longitudinal forces and resulting torques are generated around the pitch axis such to allow the motion of the aircraft.

Control on the yaw axis depends on the relative angular positions of the flaps, for example 18'A and 18'B, which compose the same row.

As a matter of fact, due to this special "relative" rotation particular torques capable of equilibrating and rotating the aircraft along the yaw axis are generated. In this manner the objective of manufacturing a compact single or double seat aircraft, remote controlled without people on board, with a rotating wing, whose controllability is ensured by two series of rows of flaps arranged orthogonal to each other is attained. Furthermore, advantageously such compact single or double seat aircraft, remote controlled without people on board, reduces problems regarding risks involved in using the tail rotor, omitted herein and replaced by the two counter-rotating rotors, and problems regarding the presence of big rotors in motion at human height, replaced by two small rotors shielded by a cylindrical structure.

It has thus been seen that a compact single or double seat aircraft, remote controlled without people on board, with a rotating wing according to the present invention attains the objectives described above.

The compact single or double seat aircraft, remote controlled without people on board, with a rotating wing thus conceived according to the present invention is susceptible to several modifications and variants, all falling within the same inventive concept, as defined by the wording of the claims.

In addition, in practice the material used, alongside the sizes and components, may vary depending on the technical requirements.

## Claims

1. Compact ultralight aircraft (10), comprising two coaxial counter-rotating rotors (11, 11'), to each one which at least two rigid blades (12) are connected, centrally ducted in a cylindrical structure (13), of a radius substantially slightly greater than the size of said rigid blades (12), and rotated by an engine (14), through driving means (21), a compartment (15) rigidly connected below to said cylindrical structure (13), **characterised in that** said aircraft (10) further comprises two series of parallel rows of flaps (18', 18") arranged orthogonal to each other to form a grid, said two series of parallel rows of flaps (18', 18") being joined and contained in said cylindrical structure (13) in various cylindrical sections one over the other, each of said parallel rows (18', 18") being composed by at least two of said flaps (18'A, 18'B; 18"A, 18"B) in series, said two series of parallel rows of flaps (18', 18") being arranged below said two coaxial counter-rotating rotors (11, 11').

2. Ultralight compact aircraft (10) according to claim 1 **characterised in that** it comprises at least one seat (16) in said compartment (15) for transporting at least one person (19).

3. Ultralight compact aircraft (10) according to claim 1 or 2 **characterised in that** it comprises at least one stabilising fin (17).

4. Aircraft (10) according to any preceding claim **characterised in that** said rigid blades (12) have a variable blade pitch angle.

5. Aircraft (10) according to any preceding claim **characterised in that** one (18') of said two series of parallel rows of flaps (18', 18") is arranged longitudinally to the direction of motion of said aircraft (10).

6. Aircraft (10) according to claim 5 **characterised in that** said at least two flaps (18'A, 18'B; 18"A, 18"B) of each said row (18', 18") selectively rotate with respect to said cylindrical structure (13) integrally between them to form a single rigid body rotating around an axis (20', 20") crossing it longitudinally or in an independent manner with respect to said at least another flap (18'A, 18'B; 18"A, 18"B) which completes the same row.

7. Aircraft (10) according to claim 6 **characterised in that** said axes (20', 20") longitudinally cross each said row of flaps (18', 18") in a position close to its upper end.

8. Aircraft (10) according to claim 1 **characterised in that** said at least one stabilising fin (17) mainly extends vertically and it is connected to said compartment (15) at a rear position.

9. Aircraft (10) according to claim 1 **characterised in that** said grid formed by said two series of parallel rows of flaps (18', 18") is provided with a central portion in which said flaps (18'A, 18'B; 18"A, 18"B) which form said parallel rows of flaps (18', 18") have a length such to allow passage of said driving means (21) of the rotational motion from said engine (14) to said two coaxial counter-rotating rotors (11, 11').

10. Aircraft (10) according to claim 9 **characterised in that** said driving means (21) of the rotational motion from said engine (14) to said two coaxial counter-rotating rotors (11, 11'), are a rotating shaft.

## Patentansprüche

1. Kompaktes ultraleichtes Flugzeug (10), umfassend zwei koaxiale gegenläufig drehende Rotoren (11, 11'), mit jedem von denen mindestens zwei starre Blätter (12) verbunden sind, die mittig in einer zylindrischen Konstruktion (13) mit einem im Wesentlichen geringfügig größeren Radius als die Größe der starren Blätter (12) ummantelt sind und die von einem Motor (14) mit Hilfe eines Antriebsmittels (21) gedreht werden, wobei unter der zylindrischen Konstruktion (13) eine Kabine (15) starr angeschlossen ist, **dadurch gekennzeichnet, dass** das Flugzeug (10) ferner zwei Folgen paralleler Klappenreihen (18', 18") umfasst, die rechtwinklig zueinander angeordnet sind, um ein Gitter zu bilden, wobei die zwei Folgen paralleler Klappenreihen (18', 18") in der zylindrischen Konstruktion (13) in verschiedenen zylindrischen Abschnitten übereinander verbunden und enthalten sind, wobei jede der parallelen Reihen (18', 18") aus mindestens zwei in Folge angeordneten Klappen (18'A, 18'B; 18"A, 18"B) besteht, wobei diese zwei Folgen paralleler Klappenreihen (18', 18") unter den zwei koaxialen gegenläufig drehenden Rotoren (11, 11') angeordnet sind.

2. Ultraleichtes kompaktes Flugzeug (10) nach Anspruch 1, **dadurch gekennzeichnet, dass** es mindestens einen Sitz (16) in der Kabine (15) zum Befördern von mindestens einer Person (19) umfasst.

3. Ultraleichtes kompaktes Flugzeug (10) nach Anspruch 1 oder 2, **dadurch gekennzeichnet, dass** es mindestens eine Stabilisatorflosse (17) umfasst.

4. Flugzeug (10) nach einem der vorherigen Ansprüche, **dadurch gekennzeichnet, dass** die starren Blätter (12) einen veränderlichen Blattanstellwinkel aufweisen.

5. Flugzeug (10) nach einem der vorherigen Ansprüche, **dadurch gekennzeichnet, dass** eine (18') der zwei Folgen paralleler Klappenreihen (18', 18") längs zur Bewegungsrichtung des Flugzeugs (10) angeordnet ist.

6. Flugzeug (10) nach Anspruch 5, **dadurch gekennzeichnet, dass** sich mindestens zwei Klappen (18'A, 18'B; 18"A, 18"B) jeder besagten Reihe (18', 18") selektiv gegenüber der zylindrischen Konstruktion (13) als ein Ganzes miteinander, so dass sie einen einzigen starren Körper bilden, der sich um eine Achse (20', 20") dreht, die in Längsrichtung durch ihn verläuft, oder unabhängig von der mindestens einen anderen Klappe (18'A, 18'B; 18"A, 18"B) drehen, welche die selbe Reihe vervollständigt.

7. Flugzeug (10) nach Anspruch 6, **dadurch gekennzeichnet, dass** die Achse (20', 20") jede Klappenreihe (18', 18") in einer Position nahe ihrem oberen Ende in Längsrichtung durchläuft.

8. Flugzeug (10) nach Anspruch 1, **dadurch gekennzeichnet, dass** sich die mindestens eine Stabilisatorflosse (17) hauptsächlich vertikal ausdehnt und in einer rückseitigen Position mit der Kabine (15) verbunden ist.

9. Flugzeug (10) nach Anspruch 1, **dadurch gekennzeichnet, dass** das durch die zwei Folgen von parallelen Klappenreihen (18', 18") gebildete Gitter über einen mittleren Bereich verfügt, in dem die Klappen (18'A, 18'B; 18"A, 18"B), welche die parallelen Klappenreihen (18', 18") bilden, eine solche Länge haben, dass der Durchgang des Mittels zum Führen (21) der Drehbewegung vom Motor (14) zu den zwei koaxialen gegenläufig drehenden Rotoren (11, 11') möglich ist.

10. Flugzeug (10) nach Anspruch 9, **dadurch gekennzeichnet, dass** das Mittel zum Führen (21) der Drehbewegung vom Motor (14) zu den zwei koaxialen gegenläufig drehenden Rotoren (11, 11') eine Drehwelle ist.

## Revendications

1. Aéronef compact ultraléger (10) comprenant deux rotors coaxiaux contre-rotatifs (11, 11'), à chacun desquels sont connectés au moins deux pales rigides (12), carénés centralement dans une structure cylindrique (13), d'un rayon sensiblement légèrement supérieur à la dimension desdites pales rigides (12), et entrainés en rotation par un moteur (14), par le biais de moyens d'entraînement (21), un compartiment (15) connecté rigidement au-dessous de ladite structure cylindrique (13), **caractérisé en ce que** ledit aéronef (10) comprend en outre deux séries de rangées parallèles de volets (18', 18") disposés orthogonalement entre eux pour former une grille, lesdites deux séries de rangées parallèles de volets (18', 18") étant unies et contenues dans ladite structure cylindrique (13) en diverses sections cylindriques l'une au-dessus de l'autre, chacune desdites rangées parallèles (18', 18") étant composées d'au moins deux desdits volets (18'A, 18'B; 18"A, 18"B) en séries, lesdites deux séries de rangées parallèles de volets (18', 18") étant disposées au-dessous desdits deux rotors coaxiaux contre-rotatifs (11, 11').

2. Aéronef compact ultraléger (10) selon la revendication 1, **caractérisé en ce qu'**il comprend au moins un siège (16) dans ledit compartiment (15) pour transporter au moins une personne (19).

3. Aéronef compact ultraléger (10) selon la revendication 1 ou 2, **caractérisé en ce qu'**il comprend au moins une ailette de stabilisation (17).

4. Aéronef (10) selon l'une quelconque des revendications précédentes, **caractérisé en ce que** lesdites pales rigides (12) ont un angle de pas de pale variable.

5. Aéronef (10) selon l'une quelconque des revendications précédentes, **caractérisé en ce qu'**une (18') desdites deux séries de rangées parallèles de volets (18', 18") est agencée longitudinalement à la direction de mouvement dudit aéronef (10).

6. Aéronef (10) selon la revendication 5, **caractérisé en ce que** lesdits au moins deux volets (18'A, 18'B; 18"A, 18"B) de chaque dite rangée (18', 18") tourne sélectivement par rapport à ladite structure cylindrique (13) d'une manière intégrale entre eux, pour former un unique corps rigide tournant autour d'un axe (20', 20") le traversant longitudinalement, ou d'une manière indépendante l'un par rapport à ledit au moins un autre volet (18'A, 18'B; 18"A, 18"B) qui complète la même rangée.

7. Aéronef (10) selon la revendication 6, **caractérisé en ce que** lesdits axes (20', 20") traversent longitudinalement chaque dite rangée de volets (18', 18") dans une position proche de sont extrémité supérieure.

8. Aéronef (10) selon la revendication 1, **caractérisé en ce que** ladite au moins une ailette de stabilisation (17) s'étend principalement verticalement et elle est connectée audit compartiment (15) au niveau d'une position postérieure.

9. Aéronef (10) selon la revendication 1, **caractérisé en ce que** ladite grille formée par lesdites deux séries de rangées parallèles de volets (18', 18") est prédisposée avec une portion centrale dans laquelle lesdits volets (18'A, 18'B; 18"A, 18"B) qui forment lesdites rangées parallèles de volets (18', 18") ont une longueur telle qu'elle permette le passage desdits moyens d'entraînement (21) du mouvement de rotation dudit moteur (14) auxdits deux rotors coaxiaux contre-rotatifs (11, 11').

10. Aéronef (10) selon la revendication 9, **caractérisé en ce que** lesdits moyens d'entraînement (21) du mouvement de rotation dudit moteur (14) auxdits deux rotors coaxiaux contre-rotatifs (11, 11') sont un arbre rotatif.
